# DEMANDE DE BREVET EUROPEEN

(11) **EP 4 102 488 A1**
(43) Date de publication de la demande: **14.12.2022**
(21) Numéro de dépôt: 22177860.8
(22) Date de dépôt: 08.06.2022
(51) Int. Cl.: G09B 9/02, G09B 9/00

(54) **SYSTÈME DE GÉNÉRATION DE COMMANDES REPRODUISANT LE COMPORTEMENT D'AU MOINS UN OPÉRATEUR HUMAIN, SIMULATEUR ET PROCÉDÉ ASSOCIÉ**

(30) Priorité: 08.06.2021 FR 2106009
(71) Demandeur: Dassault Aviation, 75008 Paris (FR)
(72) Inventeur: COLAS, Frank Daniel, 92214 SAINT CLOUD (FR); BOUILLIER, Guillaume, 92214 SAINT CLOUD (FR)
(74) Mandataire: Lavoix

(57) **Abrégé**

Le système (10) comprend au moins un automate logiciel tactique (40A à 40E), propre à basculer d'un état tactique initial à au moins un état tactique modifié lors de l'identification, à partir de données de simulation reçues d'une l'interface de réception (38), d'un événement de mission contenu dans une bibliothèque d'événements de mission (44).

Il comprend au moins un automate logiciel technique (42A à 42F), l'automate technique (42A à 42F) étant propre à s'activer sur basculement de l'automate tactique (40A à 40E) dans l'état tactique modifié, et étant propre à basculer d'un état technique initial à au moins un état technique modifié lors de l'identification, à partir des données de simulation, d'un événement de mission contenu dans la bibliothèque d'événements de mission (44). L'automate technique (42A à 42F) est propre, lors du basculement dans l'état technique modifié, à élaborer au moins une commande de la fonction à commander.

## Description

La présente invention concerne un système de génération de commandes reproduisant le comportement d'au moins un opérateur humain opérant au moins une plateforme sur la base d'évènements de mission, au cours d'une mission simulée impliquant la plateforme.

Les commandes sont destinées en particulier à alimenter un simulateur informatique propre à simuler le comportement d'au moins une plateforme au cours de la mission, en présence du ou de chaque événement de mission. Le comportement des plateformes inclut par exemple leurs déplacements, et leurs interactions au cours du temps dans un environnement de mission.

Au moins une plateforme est une plateforme aérienne, tel qu'un aéronef ou un drone. En variante ou en complément, au moins une plateforme est un véhicule terrestre, ou un engin naval ou sous-marin.

Le système de génération est propre à générer des commandes de fonctions de la plateforme pour au moins une plateforme dont l'évolution est simulée par le simulateur, ou préférentiellement pour une pluralité de plateformes, par exemple au moins une plateforme amie et/ou au moins une plateforme hostile.

La plateforme opère seule ou de manière coordonnée avec d'autres plateformes.

La mission est par exemple une mission civile ou militaire, telle qu'une mission de surveillance, une mission de protection, ou une mission de combat.

Elle comporte des évènements de mission qui se produisent au cours du temps lorsque la mission se déroule. Ces évènements de mission sont par exemple la détection d'une cible, l'apparition d'une plateforme hostile, un ravitaillement à effectuer etc.

Les commandes générées sont représentatives du comportement qu'aurait un opérateur humain face aux évènements de la mission, pour opérer les fonctions de la plateforme, et les commander.

Les simulations de mission peuvent mettre en jeu un nombre important de plateformes interagissant ensemble. Elles permettent de démontrer la capacité des plateformes à remplir leur rôle et d'évaluer quantitativement leurs performances.

Ces simulations permettent de suivre l'évolution d'une plateforme lors de l'évaluation de la mission en cours de planification ou en préparation d'une mission, ou encore d'interagir avec un opérateur humain qui s'entraine, dans le cadre d'un système d'entrainement

Généralement, pour évaluer et optimiser les performances d'une mission, il est nécessaire d'utiliser une méthode d'exploitation statistique d'un grand nombre de simulations effectuées avec différents paramètres, par exemple une méthode de type Monte Carlo, pour calculer des performances moyennes atteintes.

Les missions à simuler sont parfois complexes et comprennent un grand nombre d'acteurs. Il n'est donc pas possible en pratique de faire opérer chacune des plateformes de la mission par un opérateur humain sur un grand nombre de simulations, compte tenu du temps que ceci impliquerait et du coût associé

Pour pallier ce problème, il est donc nécessaire de simuler ce que serait le comportement d'un opérateur humain opérant une plateforme dans le contexte de la mission, afin que tout ou partie des plateformes soient opérées directement par le simulateur, sans intervention humaine.

La simulation du comportement d'un opérateur humain dans un contexte de mission ne donne pas entière satisfaction. En particulier, les modèles existants de comportement humain pour opérer les fonctions d'une plateforme sont peu adaptatifs, et le comportement généré n'est pas toujours crédible, ni robuste en fonction de l'évolution du scénario et de l'environnement. En outre, les commandes générées ne respectent pas toujours les contraintes du scénario, en particulier les règles techniques, les règles de gestion d'une plateforme, ou les règles de gestion d'une pluralité de plateformes.

Un but de l'invention est donc d'obtenir un système apte à engendrer des commandes qui reproduisent le comportement d'au moins un opérateur humain opérant au moins une plateforme au cours d'une mission, les commandes engendrées étant robustes, adaptatives, et représentatives du comportement humain, quelle que soit l'évolution du scénario et de l'environnement, tout en respectant les contraintes de mission.

A cet effet, l'invention a pour objet un système de génération de commandes du type précité, caractérisé par :
- une interface de réception de données de simulation de la mission ;
- une bibliothèque d'évènements de mission définis en fonction des données simulées de la mission ;
le système de génération comportant, pour au moins une fonction à commander de la plateforme:
- au moins un automate logiciel tactique, propre à basculer d'un état tactique initial de la plateforme à au moins un état tactique modifié de la plateforme lors de l'identification, à partir des données de simulation de la mission reçues de l'interface de réception, d'au moins un événement de mission parmi les évènements de mission contenus dans la bibliothèque d'évènements de mission;
- au moins un automate logiciel technique, associé à l'au moins un automate tactique, l'automate technique étant propre à s'activer sur basculement de l'automate tactique dans l'état tactique modifié, et étant propre à basculer d'un état technique initial de la plateforme à au moins un état technique modifié de la plateforme lors de l'identification, à partir des données de simulation de la mission reçues de l'interface de réception, d'au moins un événement de mission parmi les évènements de missions contenus dans la bibliothèque d'évènements de mission, l'automate technique étant propre, lors du basculement dans l'état technique modifié, à élaborer au moins une commande de la fonction à commander de la plateforme.

Le système de génération selon l'invention peut comprendre l'une ou plusieurs des caractéristiques suivantes, prise(s) isolément ou suivant toute combinaison techniquement possible :
- chaque événement de mission est défini par au moins une condition d'occurrence non incluse dans un script temporel, la condition d'occurrence étant susceptible d'être remplie à tout instant au cours de la mission ;
- un même événement de mission est propre à être identifié par l'automate tactique pour basculer de l'état tactique initial de la plateforme à l'au moins un état tactique modifié de la plateforme et à être identifié par le ou chaque automate technique associé à l'automate tactique pour basculer de l'état technique initial de la plateforme à l'au moins un état technique modifié de la plateforme;
- le système de génération est dépourvu d'horloge synchronisant le ou chaque automate tactique et le ou chaque automate technique ;
- le ou chaque automate tactique est propre à basculer d'un premier état tactique initial de la plateforme à au moins un premier état tactique modifié de la plateforme lors de l'identification d'un premier évènement de mission contenu dans la bibliothèque d'évènements de mission, et est propre à basculer d'un deuxième état tactique initial de la plateforme à au moins un deuxième état tactique modifié de la plateforme lors de l'identification d'au moins un deuxième événement de mission contenu dans la bibliothèque d'évènements de mission, aucune priorité n'étant définie entre le premier évènement de mission et le ou chaque deuxième événement de mission pour le basculement d'états du ou de chaque automate tactique;
- le ou chaque automate technique est propre à basculer d'un premier état technique initial de la plateforme à au moins un premier état technique modifié de la plateforme lors de l'identification du premier évènement de mission contenu dans la bibliothèque d'évènements de mission, et est propre à basculer d'un deuxième état technique initial de la plateforme à au moins un deuxième état technique modifié de la plateforme lors de l'identification du ou de chaque deuxième événement de mission contenu dans la bibliothèque d'évènements de mission aucune priorité n'étant définie entre le premier événement de mission et le ou chaque deuxième événement de mission pour le basculement d'états du ou de chaque automate technique ;
- le système de génération comporte plusieurs automates tactiques associés à une ou plusieurs plateformes, chaque automate tactique parmi tous les automates tactiques est propre à basculer d'un état tactique initial de la plateforme à au moins un état tactique modifié de la plateforme, de manière indépendante des autres automates tactiques par l'identification d'évènements de mission qui lui sont propres et dont au moins un est avantageusement différent des évènements de mission faisant basculer d'autres automates tactiques d'un état tactique initial de la plateforme à au moins un état tactique modifié de la plateforme;
- le système de génération comporte une pluralité d'automates techniques associés à un automate tactique, chaque automate technique parmi tous les automates techniques associés à un automate tactique est propre à basculer d'un état technique initial de la plateforme à au moins un état technique modifié de la plateforme, de manière indépendante des autres automates techniques par l'identification d'évènements de mission qui lui sont propres et dont au moins un est avantageusement différent des évènements de mission faisant basculer d'autres automates techniques d'un état technique initial de la plateforme à au moins un état technique modifié de la plateforme;
- il comprend, pour le ou chaque automate tactique, une pluralité d'automates logiciels techniques, associés à l'automate tactique pour élaborer une pluralité de commandes de systèmes distincts de la fonction à commander ;
- le ou chaque automate tactique est propre à basculer dans des états tactiques modifiés distincts en fonction de l'évènement de mission identifié, le système de génération comportant une pluralité d'automates techniques associés chacun à un état tactique modifié distinct pour des commandes distinctes de la fonction à commander ;
- le ou chaque automate technique, après avoir été activé par basculement dans l'état tactique modifié, est propre à élaborer la commande de la fonction à commander, indépendamment de l'état tactique modifié ;
- le ou chaque automate technique, après avoir été activé par basculement dans l'état tactique modifié, est propre à élaborer la commande de la fonction à commander en fonction de l'état tactique modifié ;
- au moins un même automate technique est activable par basculement de l'automate tactique dans au moins deux états tactiques modifiés distincts, l'automate technique étant propre à élaborer des commandes distinctes de la fonction à commander en fonction de l'état tactique modifié parmi les au moins deux états tactiques distincts ;
- il comprend une base de données de paramétrage de l'élaboration des commandes en fonction de l'état technique modifié, propre à être interrogée par le ou chaque automate technique lors du basculement dans l'état technique modifié ;
- la fonction à commander de la plateforme est choisie parmi une fonction de navigation de la plateforme dans l'environnement de mission, une fonction de gestion d'un capteur, une fonction de gestion d'un actionneur, une fonction de gestion de contraintes d'emploi entre des systèmes de la plateforme, et une fonction de gestion de communication ;
- la commande générée par l'automate technique est choisie parmi une commande de navigation, notamment une commande de vitesse, d'altitude, de cap, de pente, de facteur de charge maximal, une commande de gestion de capteur, notamment une commande d'un capteur radar, d'un capteur électromagnétique ou d'un capteur de guerre électronique, une commande d'actionneur, notamment une commande d'un système d'arme ou d'un système d'émission de rayonnement, une commande de gestion de contraintes d'emploi ou une commande d'un système de communication de la plateforme;
- la bibliothèque d'évènements contient une pluralité d'évènements de mission, chaque événement de mission étant défini par au moins un paramètre correspondant à une donnée de simulation, un opérateur mathématique de test, un seuil de valeur du paramètre à tester avec l'opérateur de test et/ou par une condition booléenne ;
- au moins un événement de mission comprend :
   * plusieurs évènements primaires, chaque événement primaire étant défini par au moins un paramètre correspondant à une donnée de simulation, un opérateur mathématique de test, un seuil de valeur du paramètre à tester avec l'opérateur de test et/ou par une condition booléenne ; et
   * au moins un opérateur logique entre deux évènements primaires ;
- la bibliothèque d'évènements est propre à être mise à jour pour permettre à un utilisateur d'ajouter des nouveaux évènements de mission prédéfinis dans la bibliothèque d'évènements.

L'invention a également pour objet un simulateur de comportement d'au moins une plateforme évoluant dans un environnement d'une mission, le simulateur comportant :
- un calculateur, propre à calculer des données de simulation du comportement de la ou de chaque plateforme dans l'environnement de mission ;
- un système de génération tel que défini plus haut, propre à recevoir des données de simulation du calculateur, à engendrer des commandes de fonctions à commander de la ou de chaque plateforme en fonction des données de simulation, le calculateur étant propre à récupérer les commandes engendrées par le système de génération pour calculer de nouvelles données de simulation tenant compte des commandes engendrées ;
- un afficheur et un gestionnaire d'affichage sur l'afficheur propre à afficher une représentation d'évolution de la ou de chaque plateforme dans l'environnement de mission.

Le simulateur selon l'invention peut comprendre la caractéristique suivante :
- une interface homme-machine raccordée au calculateur pour paramétrer au moins un état d'une mission à simuler, et/ou pour permettre à un opérateur humain de commander des fonctions d'au moins une plateforme additionnelle évoluant dans la simulation en plus de la ou de chaque plateforme commandée sur la base des commandes du système de génération.

L'invention a également pour objet un procédé de génération de commandes reproduisant le comportement d'au moins un opérateur humain opérant au moins une plateforme sur la base d'évènements de mission au cours d'une mission simulée impliquant la plateforme, mis en œuvre par un système de génération, le procédé comportant :
- la réception de données de simulation de la mission via une interface de réception du système de génération ;
puis, pour au moins une fonction à commander de la plateforme:
- le basculement d'au moins un automate logiciel tactique du système de génération, d'un état tactique initial de la plateforme à au moins un état tactique modifié de la plateforme lors de l'identification, à partir des données de simulation de la mission reçues de l'interface de réception, d'au moins un événement de mission parmi les évènements de mission contenus dans une bibliothèque d'évènements de mission définis en fonction des données simulées de la mission ;
- l'activation d'au moins un automate logiciel technique du système de génération, associé à l'au moins un automate tactique, sur basculement de l'automate tactique dans l'état tactique modifié ;
- le basculement de l'automate logiciel technique d'un état technique initial de la plateforme à au moins un état technique modifié de la plateforme lors de l'identification, à partir des données de simulation de la mission reçues de l'interface de réception, d'au moins un événement de mission parmi les évènements de missions contenus dans la bibliothèque d'évènements de mission,
- l'élaboration par l'automate technique, lors du basculement dans l'état technique modifié d'au moins une commande de la fonction à commander de la plateforme.

L'invention sera mieux comprise à la lecture de la description qui va suivre, donnée uniquement à titre d'exemple, et faite en se référant aux dessins annexés, sur lesquels :
- la figure 1 est une vue schématique d'un affichage d'une simulation de mission engendrée par un simulateur muni d'un système de génération de commandes selon l'invention ;
- la figure 2 est une vue schématique du système de génération de commandes et du simulateur selon l'invention ;
- la figure 3 est une vue schématique d'automates logiciels à états destinés à engendrer des commandes de fonctions techniques de la plateforme en fonction d'évènements de mission, et d'une base de données paramétrable d'évènements de mission ;
   - la figure 4 est un schéma synoptique illustrant les interactions entre des automates de tactiques de haut niveau destinés à générer des états tactiques, et des automates techniques de plus bas niveau, destinés à engendrer des commandes de la plateforme, en fonction d'évènements de mission ;
   - la figure 5 illustre un enchainement d'états et de commandes obtenus par les automates de navigation de la figure 4, lors d'une mission ;
   - les figures 6 à 9 sont des vues analogues à la figure 1 illustrant les effets, sur la simulation, des commandes générées par les automates de navigation.

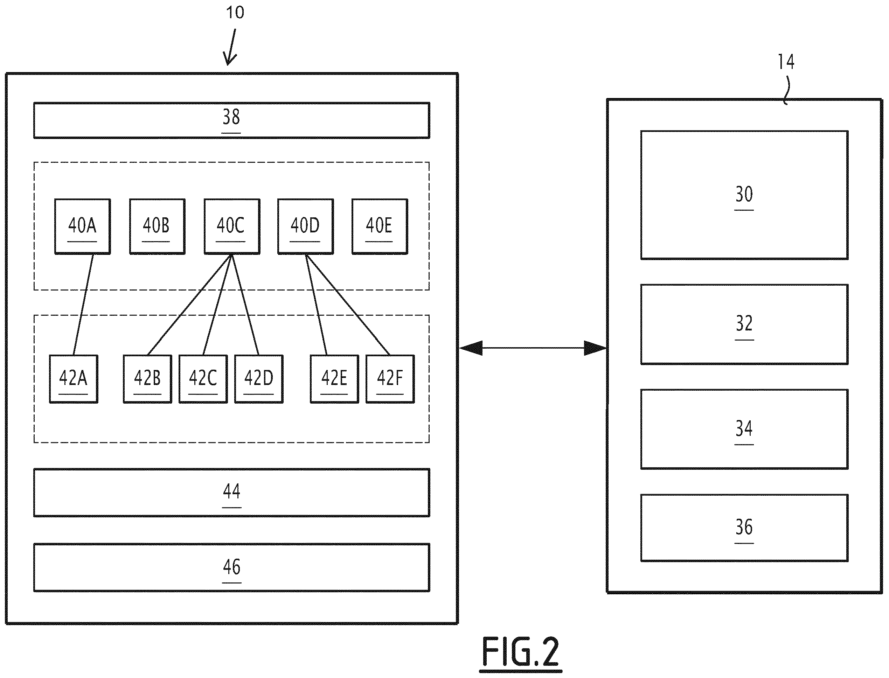

Un premier système 10 de génération de commandes représentatives du comportement d'un opérateur humain opérant au moins une plateforme 12, lors d'une mission de la plateforme 12 est illustré par la figure 2.

Le système de génération 10 est destiné à fournir des commandes de fonctions techniques de la plateforme en réponse à des évènements de mission à un simulateur 14 propre à simuler l'évolution temporelle et géographique de la plateforme 12, potentiellement en présence d'autres plateformes 16 dans un environnement de mission 18.

La plateforme 12, 16 est par exemple un aéronef, en particulier un avion militaire. En variante, au moins une des plateformes 12, 16 dont des commandes sont générées par le système de génération 10 est une plateforme terrestre, en particulier un véhicule ou/et une plateforme navale, telle qu'un navire ou un sous-marin.

La plateforme 12 est par exemple intégrée au sein d'un groupe de plateformes 12 amies dont les commandes sont toutes générées par le système de génération 10 selon l'invention.

Les autres plateformes 16 sont par exemple des acteurs hostiles, comme d'autres aéronefs éventuellement munis de capacité de surveillance ou de combat. Leurs commandes sont aussi générées par le système de génération 10.

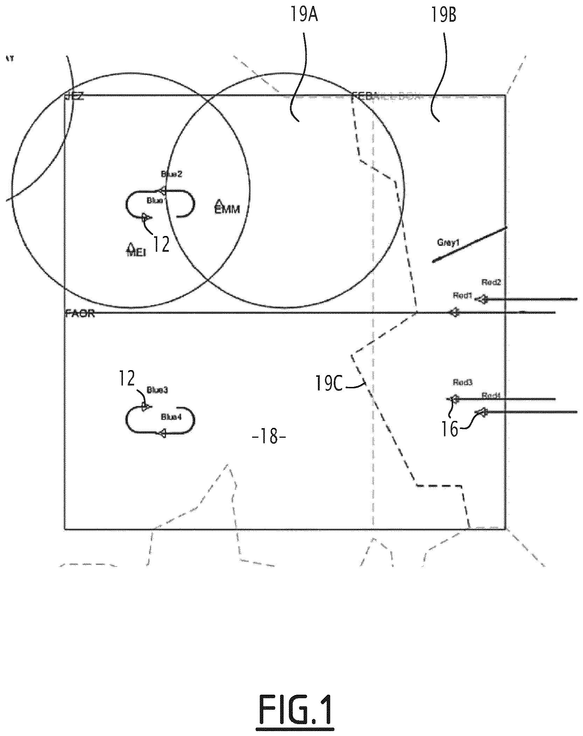

Dans l'exemple représenté sur la figure 1, le système de génération 10 génère des commandes de chacune des plateformes 12, 16 présentes dans l'environnement 18.

En variante, au moins une plateforme 12, 16 est pilotée directement par un opérateur humain interagissant avec le simulateur 14 via une interface homme machine pour engendrer les commandes de la plateforme 12, 16.

L'environnement de mission 18 comporte dans cet exemple au moins une zone amie 19A à protéger et au moins une zone hostile 19B, une frontière 19C séparant la zone amie 19A de la zone hostile 19B.

La mission des plateformes 12 comprend des objectifs de mission, comme par exemple la surveillance et la protection d'une zone 19A, l'interception de plateformes hostiles 16, la protection d'une autre plateforme 12, le traitement de plateformes hostiles 16. La mission comprend ainsi une succession d'états de mission prédéfinis avant la mise en œuvre de la simulation par le simulateur 14, par exemple en définissant sous forme d'un fichier informatique le temps auquel ces états de mission interviennent, ou/et les conditions dans lesquelles les états de mission interviennent.

Ces états sont par exemple le franchissement de la frontière 19C par les plateformes hostiles 16 dans l'environnement de mission ou encore la réaction à des manœuvres et/ou des actions des plateformes 16 ou la réaction pour coordination à des manœuvres et/ou des actions des plateformes 12.

Le simulateur 14 est destiné par exemple à simuler le déroulement d'une mission lors de la planification de la mission, en particulier pour optimiser le déroulement de la mission.

En variante, il est destiné à la préparation d'une mission, la mission ayant été préalablement planifiée, en vue de jouer la mission pour permettre aux opérateurs humains de la mission de visualiser son déroulement en préparation de mission.

Dans ces deux derniers cas, le simulateur 14 est propre à simuler le déplacement et les actions exécutées par l'ensemble des plateformes 12, 16 en fonction des évènements de mission, et en fonction des commandes reçues du système de génération de commandes 10 représentatives du comportement d'un opérateur humain.

En variante, le simulateur est un système d'entrainement pour au moins un opérateur humain.

Dans ce cas, au moins un opérateur humain est propre à piloter physiquement une plateforme 12, 16 dans un camp, au moins une autre plateforme 12, 16 étant commandée à l'aide des commandes générées par le système de génération 10.

En référence à la figure 2, le simulateur 14 comprend de préférence au moins un calculateur 30, propre à calculer les déplacements et les actions de chaque plateforme 12, 16 de la mission, en fonction des états de mission possibles, et des commandes reçues du système de génération 10, ou/et le cas échéant d'un opérateur humain.

Le calculateur 30 comprend d'une manière connue au moins un processeur et au moins une mémoire comportant des modules logiciels destinés à être exécutés par le processeur pour effectuer les calculs.

Le calculateur 30 produit à chaque instant des données de simulation. Les données de simulation incluent notamment des données relatives aux déplacements de chaque plateforme 12, 16 (position, cap, vitesse, attitudes, facteur de charge etc.), aux utilités et aux systèmes qu'elle contient (notamment carburant, armes, etc.), aux actions qu'elle effectue (notamment actionnement de capteur ou de liaison de données, activation d'une arme, activation d'un émetteur électromagnétique, etc.).

Le simulateur 14 comprend également au moins un afficheur 32 et au moins un ensemble de génération d'affichage 34 sur l'afficheur 32, pour engendrer et afficher une restitution de la simulation sur l'afficheur 32, au cours du temps. Une restitution à un instant donné est illustrée par la figure 1.

Cette restitution comprend un affichage de symboles représentant respectivement les plateformes 12, 16 sur une représentation bidimensionnelle ou tridimensionnelle de l'environnement de mission 18.

L'affichage sur l'afficheur 32 est propre à être mis à jour à chaque instant pour déplacer les plateformes 12, 16 dans l'environnement de mission 18 en fonction des déplacements et des actions calculés par le calculateur 30, à partir des commandes reçues du système de génération 10, ou/et d'un opérateur humain. Il est propre à afficher une représentation des actions effectuées, par exemple le tir d'une arme et son déplacement vers une cible.

Le simulateur 14 comprend en outre au moins une interface homme machine 36 destinée à permettre l'interaction avec un opérateur, pour paramétrer et lancer l'exécution de la simulation, et/ou pour participer au pilotage d'au moins une plateforme 12, 16.

Chaque plateforme 12, 16 est constituée d'une pluralité de systèmes fonctionnels interagissant les uns avec les autres pour réaliser des fonctions techniques de la plateforme 12, notamment la déplacer au sein de l'environnement de mission 18 et lui faire réaliser des actions dans l'environnement de mission 18.

Chaque fonction technique de la plateforme est réalisée par un ou plusieurs systèmes fonctionnels de la plateforme 12, 16.

Dans le cas où la plateforme 12, 16 est un aéronef, les systèmes fonctionnels comportent par exemple un système fonctionnel de navigation, propre à appliquer des commandes de déplacement de la plateforme 12, 16 en trois dimensions au cours du temps, au moins un système fonctionnel de capteur, par exemple un capteur radar, un capteur électromagnétique, un capteur de guerre électronique, un système fonctionnel d'actionneur, par exemple d'une arme ou d'un système électromagnétique, un système fonctionnel de gestion des contraintes d'emploi entre les systèmes fonctionnels de la plateforme et un système fonctionnel de communication avec l'extérieur.

Sur une plateforme réelle, ces systèmes fonctionnels sont propres à recevoir des commandes d'un opérateur humain, pour faire évoluer la plateforme 12, 16 dans l'environnement de mission 18 et lui permettre de réaliser des objectifs de la mission.

Par exemple, le système de navigation est propre à être piloté par un opérateur humain pour définir une vitesse, une altitude, un cap, une pente, et un facteur de charge maximum de l'aéronef.

Le système fonctionnel d'actionneur est propre à être piloté par l'opérateur, pour engendrer un ordre de tir, un mode de tir, et un type d'arme utilisé, un mode de compatibilité, un mode d'affectation des cibles.

Le système de capteur est propre à être opéré pour définir par exemple une émission, une amplitude de recherche et ou de poursuite d'une cible, et une direction d'émission.

Le système de communication est propre à être opéré par l'utilisateur pour réaliser des communications entre la plateforme 12, 16 et le sol ou d'autres plateformes 12, 16.

Le système de génération de commandes 10 est destiné, à chaque instant, à produire des commandes qui seraient données aux systèmes fonctionnels de la plateforme 12, 16 par un opérateur humain, à la place de l'opérateur humain, en fonction d'évènements de mission prédéfinis et paramétrables, détectés à partir des données de simulation provenant du simulateur 14. Il est propre à fournir les commandes générées au simulateur 14 pour permettre au simulateur 14 de simuler le comportement d'au moins une plateforme 12, 16 en fonction des commandes reçues du système de génération 10.

Les commandes générées par le système de génération 10 sont représentatives de celles qu'appliquerait un opérateur humain pilotant les systèmes fonctionnels de la plateforme 12, 16.

Par exemple, pour la navigation, un opérateur humain qui pilote la plateforme 12, 16 doit définir une vitesse, une altitude, un cap, une pente, et un facteur de charge de l'aéronef. Le système de génération 10 est propre à définir, sans intervention d'un opérateur humain, des commandes correspondantes par une vitesse, une altitude, un cap, une pente, et un facteur de charge de l'aéronef en tenant compte des capacités de la plateforme.

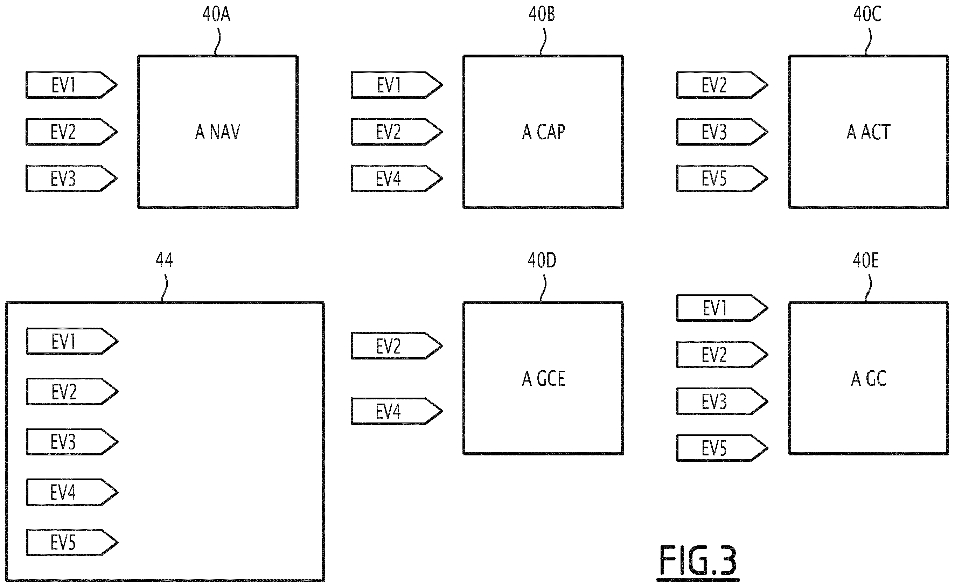

Comme illustré par la figure 2 et par la figure 3, le système de génération de commandes 10 comporte une interface 38 de réception des données de simulation générées par le simulateur 14, et une architecture modulable d'automates logiciels à états 40A à 40E, 42A à 42F destinés à engendrer chacun une ou plusieurs commandes d'un système fonctionnel d'au moins une plateforme 12, 16.

En référence à la figure 3, le système de génération de commandes 10 comporte, pour chaque plateforme 12,16 pour laquelle des commandes sont générées, au moins un premier automate tactique 40A à 40E de haut niveau, destiné, sur la base d'un évènement de mission, à produire au moins un état tactique représentatif de tâches à réaliser en fonction de l'évènement de mission.

Le système de génération de commandes 10 comprend en outre, pour chaque automate tactique 40A à 40E de haut niveau correspondant à une plateforme 12,16 pour laquelle des commandes sont générées, au moins un automate technique 42A à 42F de plus bas niveau, propre à être activé sur la base d'états générés par l'automate tactique 40A à 40E de plus haut niveau, afin de produire au moins un état technique à atteindre en fonction d'un événement de mission prédéfini, et au moins une commande représentative du comportement d'un opérateur humain en fonction de l'évènement de mission dans cet état technique.

Le système de génération de commandes 10 comprend en outre une bibliothèque 44 d'évènements de mission paramétrables EV1 à EV5 et une base de données 46 de paramétrage des automates 40A à 40E, 42A à 42F, propre à permettre la définition des transitions entre les états de chaque automate 40A à 40E, 42A à 42F, et le calcul des commandes.

Le système de génération de commandes 10 comprend au moins un processeur et au moins une mémoire comportant des modules logiciels destinés à être exécutés par le processeur pour exécuter les modules logiciels.

L'interface de réception 38 est propre à recevoir en temps réel les données de simulation provenant du simulateur 14.

En référence à la figure 3, chaque automate tactique 40A à 40E est propre à identifier, à partir des données de simulation reçues du simulateur 14, l'occurrence d'au moins un événement de mission parmi les évènements de mission EV1 à EV5 contenus dans la bibliothèque d'évènements de mission 44.

Chaque automate tactique 40A à 40E est propre à basculer d'au moins un état tactique initial à un état tactique modifié, lorsque se produit au moins un événement de mission EV1 à EV5 présent dans la bibliothèque 44 d'évènements de missions. L'état tactique modifié est défini dans la base de données 46 en fonction de l'évènement de mission EV1 à EV5, pour chaque événement de mission EV1 à EV5 pour lequel l'automate tactique 40A à 40E est propre à basculer.

Les états tactiques sont par exemple pour l'automate tactique 40A de navigation, un état CAP qui est une manœuvre permettant de réaliser une trajectoire en hippodrome, un état COMMIT qui est une manœuvre permettant de se placer sur une route assurant une navigation en collision vis-à-vis d'une cible, un état CRANK qui est une manœuvre permettant de suivre une route angulairement décalée par rapport à une cible, un état ABORT qui est une navigation faisant tourner le dos à une menace, un état de retour à la base.

Dans l'exemple illustré par la figure 3, le système de génération 10 comporte plusieurs automates tactiques 40A à 40E. Chaque automate tactique 40A à 40E est associé de préférence à au moins une fonction technique de la plateforme 12, 16 réalisée par au moins un système fonctionnel destiné à être commandé par un opérateur humain. Les fonctions techniques sont par exemple la navigation NAV, la gestion d'un capteur CAP, la gestion d'un actionneur ACT, la gestion des contraintes d'emploi entre les systèmes fonctionnels GCE ou/et la gestion des communications GC.

Chaque automate technique de plus bas niveau 42A à 42F est associé à un automate tactique de plus haut niveau 40A à 40E.

Chaque automate technique de plus bas niveau 42A à 42F est propre à s'activer lorsque l'automate tactique de plus haut niveau 40A à 40E auquel il est associé bascule dans un état tactique prédéfini.

Ainsi, le passage d'un automate tactique 40A à 40E depuis un état initial à un état final engendre l'activation d'au moins un automate technique de plus bas niveau 42A à 42F associé à l'automate tactique de plus haut niveau 40A à 40E.

De préférence, l'automate tactique 40A à 40E comprend pour chaque état tactique modifié, un automate technique de navigation 42A à 42F, qui est propre à calculer des commandes de fonctions de la plateforme lorsque l'automate tactique 40A à 40E bascule dans l'état modifié.

Une fois activé, chaque automate technique de plus bas niveau 42A à 42F est propre à identifier, à partir des données de simulation reçues du simulateur 14, l'occurrence d'au moins un évènement de mission parmi les évènements de mission EV1 à EV5 contenus dans la bibliothèque d'évènements de mission 44.

Il est propre à basculer d'un état technique initial à un état technique modifié, avantageusement en fonction d'évènements de mission, et à définir ou calculer des commandes de fonctions de la plateforme 12, 16 qui correspondent à l'état technique modifié sur la base d'un paramétrage défini dans la base de données 46. Ces commandes sont paramétrées dans la base de données 46 pour reproduire un comportement d'un opérateur humain soumis à l'évènement de mission.

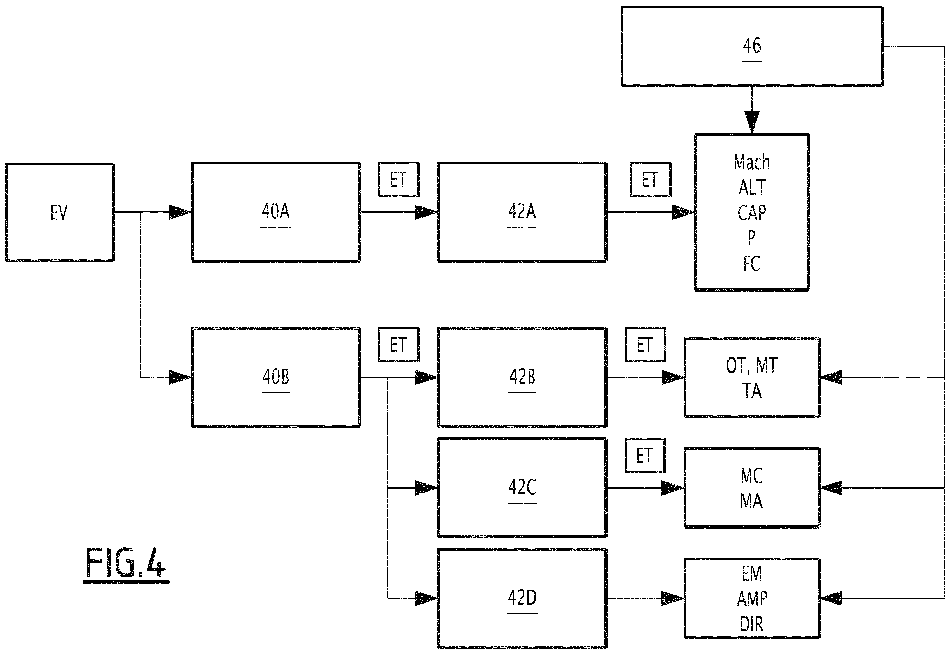

Dans l'exemple représenté sur la figure 4, l'automate tactique de navigation 40A est associé à au moins un automate technique de navigation 42A. De préférence, l'automate tactique de navigation 40A comprend pour chaque état tactique modifié, un automate technique de navigation 42A qui est propre à basculer dans un état technique modifié, par exemple en fonction d'au moins un évènement de mission, et à définir ou calculer des commandes de systèmes de navigation de la plateforme, tels qu'une commande de Mach, d'altitude ALT, de cap CAP, de pente P et/ou de facteur de charge maximum FC correspondant à l'état technique modifié, en fonction d'un paramétrage défini dans la base de données 46.

L'automate tactique d'actionneur 40B par exemple d'un système d'armes est associé à plusieurs automates techniques d'actionneur 42B, 42C, 42D, par exemple un automate technique de conduite de tir 42B, un automate technique de définition des priorités 42C et un automate technique d'actionnement d'un capteur 42C, activables pour chaque état tactique modifié.

Une fois activé, l'automate technique de conduite de tir 42B est par exemple propre à passer dans un état technique modifié (notamment un état de tir) et à définir ou calculer des commandes de systèmes d'armes de la plateforme telles qu'un ordre de tir OT, un mode de tir MT, ou/et un type d'arme à utiliser pour le tir TA, en fonction d'un paramétrage défini dans la base de données 46.

Une fois activé, l'automate technique de définition des priorités 42C est par exemple propre à passer dans un état technique modifié (notamment un état de définition de cible) et à définir ou calculer des commandes de systèmes d'armes de la plateforme telles qu'un mode de compatibilité MC et un mode d'affectation des cibles MA, en fonction d'un paramétrage défini dans la base de données 46.

Une fois activé, l'automate technique d'actionnement d'un capteur 42C est par exemple propre à passer dans un état technique modifié (par exemple un état d'émission de capteur) et à définir ou calculer des commandes de systèmes de capteurs de la plateforme telles qu'un type d'émission EM, une amplitude d'émission AMP, ou/et une direction de balayage DDV, en fonction d'un paramétrage défini dans la base de données 46.

La bibliothèque d'évènements 44 comprend une pluralité d'évènements prédéfinis EV1 à EV5. Elle est propre à être enrichie par un utilisateur pour ajouter un ou plusieurs évènements supplémentaires à l'aide d'une interface de saisie.

Contrairement aux états de missions qui sont définis par une condition d'occurrence temporelle incluse dans un script temporel, qui est remplie à un temps prédéfini au cours de la simulation de la mission, chaque événement de mission EV1 à EV5 est défini par au moins une condition d'occurrence non incluse dans un script temporel, qui peut être remplie à tout instant au cours de la simulation de la mission, indépendamment du temps.

Chaque événement EV1 à EV5 est ainsi défini par au moins un paramètre, un opérateur mathématique de test, un seuil de valeur du paramètre à tester avec l'opérateur de test et/ou par une condition booléenne.

Le paramètre est par exemple un paramètre de distance, un paramètre de durée, ou/et un paramètre mesuré sur l'aéronef, comme une vitesse, une altitude, ou un niveau de carburant.

L'opérateur mathématique de test est par exemple un opérateur choisi parmi « supérieur à », « supérieur ou égal à », « inférieur à », « inférieur ou égal à » , « égal à » « différent de », etc.

Le seuil de valeur à tester avec l'opérateur de test est par exemple une valeur définie du paramètre qui peut être une constante stockée dans la bibliothèques d'évènements 44 ou une constante appelée à partir de la base de données 46 en fonction de l'état de l'automate.

L'évènement comprend dans certain cas des opérateurs logiques entre plusieurs évènements primaires, chaque événement primaire étant défini par au moins un paramètre, un opérateur mathématique de test, un seuil de valeur du paramètre à tester avec l'opérateur de test et/ou par une condition booléenne.

Les opérateurs logiques sont par exemple des opérateurs ET, OU, NON, etc.

Un exemple d'évènement primaire est par exemple défini par :
- un paramètre égal à la distance à une cible détectée ;
- un opérateur mathématique « inférieur à » ;
- une valeur de seuil égale à 20 miles nautiques (environ 37 km).

Un événement complexe est par exemple défini comme suit :
Détection_Cible = 1 ET 3D = 1 ET (Distance < D0 OU DansZoneDeResponsabilité = 1),
où Détection_Cible = 1 est une condition booléenne définie sur la détection d'une cible, 3D =1 est une condition booléenne définie sur le caractère tridimensionnel de la cible détectée, Distance est la distance à la cible, D0 est une valeur de seuil de distance, DansZoneDeResponsabilité = 1 est une condition booléenne définie sur la présence de la cible dans une zone de responsabilité définie pour la plateforme 12, 16.

Chaque évènement est représentatif d'une analyse que pourrait faire un opérateur humain en présence des données de simulation.

La base de données de paramétrage 46 est constituée de fichiers de configuration contenant des paramètres de définition des basculements d'états pour chaque automate 40A à 40E, 42A à 42F en fonction des évènements EV1 à EV5 présents dans la bibliothèque d'évènements 44, et de paramétrage de calcul des commandes en fonction des états modifiés après basculement.

Par exemple, la base de données de paramétrage définit pour chaque automate 40A à 40E, 42A à 42F, au moins un événement EV1 à EV5 qui produit un basculement d'état depuis un état initial donné et l'état modifié associé à ce basculement d'état en fonction du ou de chaque évènement EV1 à EV5 ayant provoqué le basculement d'état.

Pour chaque automate tactique de haut niveau 40A à 40E, la base de données de paramétrage définit en outre le ou chaque automate technique de plus bas niveau 42A à 42F à activer lors du basculement dans l'état modifié.

Pour chaque automate technique de plus bas niveau 42A à 42F, la base de données de paramétrage définit également les commandes à appliquer ou/et les paramètres à utiliser pour calculer les commandes à appliquer en fonction de l'état technique modifié, et éventuellement, des données de simulation, par exemple en fonction de mesures d'évolution de la plateforme 12, 16 dans l'environnement 18.

L'architecture pyramidale ainsi définie permet à chaque automate 40A à 40E et 42A à 42F d'être paramétré de manière indépendante, en réponse à des évènements de mission qui lui sont propres, sans nécessairement avoir à changer le paramétrage ou la programmation d'autres automates. Il est ainsi possible de synchroniser ou non les états des automates en fonction d'un évènement donné, sans nécessairement avoir à reprogrammer les autres automates.

L'intelligence des réactions de chaque automate est liée aux évènements de mission présents dans la bibliothèque 44, qui peuvent être enrichis à volonté par l'utilisateur. Les évènements sont paramétrés de manière très simple, et sont donc faciles à régler par simple modification des fichiers de configuration.

Le paramétrage est ainsi très libre et couvre la génération de commandes pour un ou plusieurs opérateurs interagissant directement ou à distance avec le simulateur 14. Le système de génération 10 est adaptable à des plateformes 12, 16 fixes ou mobiles ayant plusieurs fonctions à opérer, les plateformes 12, 16 évoluant dans un environnement 4D (position et temps) au sein d'une simulation.

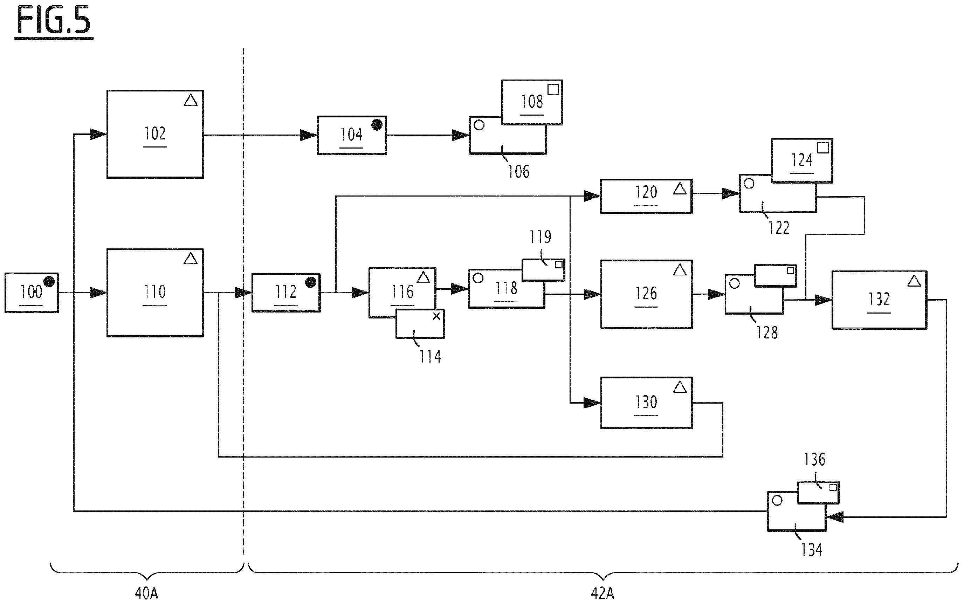

Le fonctionnement du système 10 de génération de commandes selon l'invention au sein du simulateur 14 va maintenant être décrit en regard des figures 5 à 9.

Le fonctionnement est décrit par exemple dans le cas de la simulation du comportement d'au moins une plateforme aérienne 12, 16 dans un environnement de mission 18. Comme décrit plus haut, l'environnement de mission 18 comporte ici au moins une zone amie 19A à protéger et au moins une zone hostile 19B, une frontière 19C séparant la zone amie 19A de la zone hostile 19B. Comme on le verra plus bas, au moins une plateforme 12 est une plateforme amie et au moins une plateforme 16 est une plateforme hostile.

Le système de génération 10 est propre à engendrer des commandes des fonctions d'au moins deux plateformes 12, 16 qui reproduisent les commandes qu'aurait effectué un opérateur humain.

Le fonctionnement de l'automate tactique de navigation 40A, et de chaque automate technique de navigation 42A, des plateformes 12, 16 va être plus particulièrement décrit, notamment en regard de la figure 5. Sur cette figure, les boites avec des ronds pleins sont représentatives d'états tactiques de l'automate tactique de navigation 40A, les boites avec des ronds vides sont représentatives d'états techniques de l'automate technique de navigation 42A, les boites avec des triangles sont représentatives d'évènements de mission, les boites avec des carrés sont représentatives du paramétrage des commandes générées par l'automate technique de navigation 42A, et les boites avec des croix sont représentatives de valeurs de seuils d'évènements.

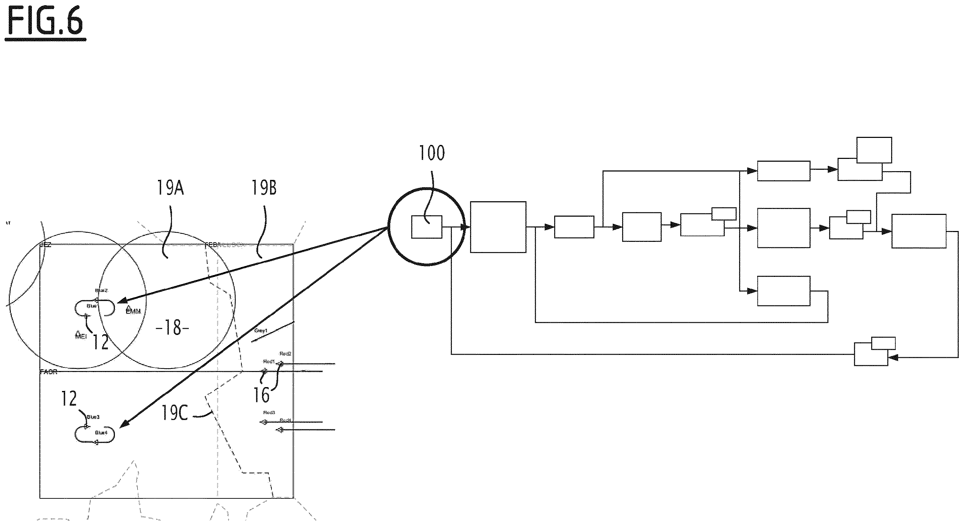

Initialement, comme illustré sur la figure 6, la plateforme amie 12 est dans un état tactique 100 dit de CAP. Elle effectue ainsi une manœuvre permettant de réaliser une trajectoire en hippodrome. Elle surveille ainsi la zone amie 19A.

Le simulateur 14 simule l'évolution de la plateforme 12 et calcule notamment le carburant restant dans la plateforme 12.

Si aucune plateforme hostile 16 n'apparait, et que le niveau de carburant au sein de la plateforme passe sous une valeur seuil prédéfinie dans la bibliothèque d'évènements 44, un événement de mission 102 dit de « Bingo carburant » est détecté par l'automate tactique de navigation 40A parmi les évènements présents dans la bibliothèque d'évènements 44. Il correspond à une limite minimale de carburant pour effectuer la mission.

L'automate tactique de navigation 40A bascule alors dans l'état tactique 104 de retour base. Ceci active un automate technique de navigation 42A correspondant à cet état. L'automate technique de navigation 42A bascule dans un état technique 106 de navigation vers la base et détermine les commandes 108 nécessaires pour ce retour, comme un Mach, un cap, une pente, etc, à partir des paramètres définis dans la base de données de paramétrage 46 lorsque l'automate technique de navigation 42A est dans l'état technique de navigation vers la base 106.

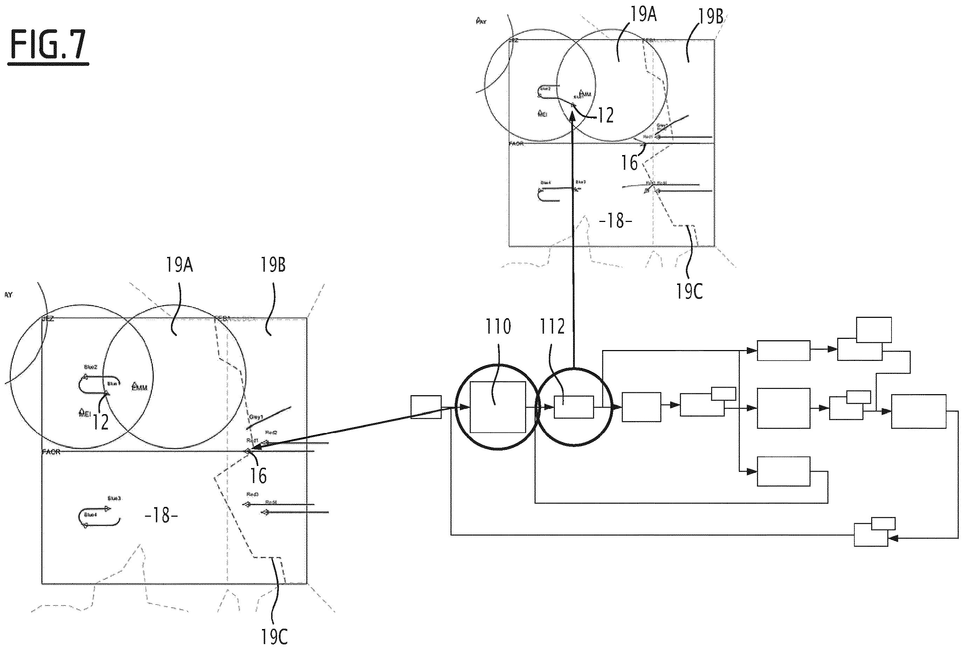

Si au contraire, comme illustré par la figure 7, une plateforme hostile 16 apparait dans l'environnement de mission 18 et franchit la frontière 19C, un évènement de mission 110 de détection de cible dans une zone de responsabilité de la plateforme 12 est détecté par l'automate tactique de navigation 40A parmi les évènements présents dans la bibliothèque d'évènements 44.

L'évènement de mission 110 engendre le basculement de l'automate tactique de navigation 40A dans un état tactique d'engagement 112 dit état « Commit ».

Ceci active un automate technique de navigation 42A correspondant à cet état. L'automate technique 42A de navigation engendre des commandes permettant de diriger la plateforme 12 vers la plateforme hostile 16, comme visible sur l'affichage en haut sur la figure 7.

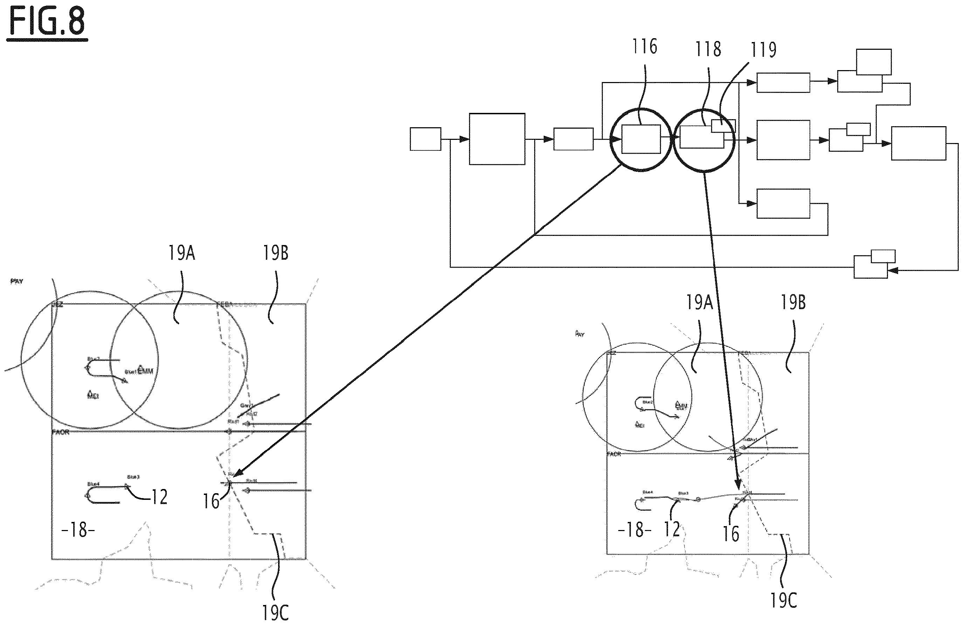

En référence à la figure 8, lorsque la distance entre la plateforme 16 (en bas sur la figure) et la plateforme 12 est inférieure à la valeur seuil 114 définie dans la bibliothèque d'évènements, un évènement 116 de mission de tir est détecté par l'automate technique de navigation 42A de la plateforme 16 parmi les évènements présents dans la bibliothèque d'évènements 44.

Un tir est effectué par la plateforme 16, sur la base de commandes engendrées par les automates techniques 42B à 42D de l'automate tactique d'actionneur 40C de la plateforme 16.

Ceci engendre le basculement de l'automate technique de navigation 42A de la plateforme 16 dans un état technique 118 de suite de tir ou « Crank ». Cet état correspond à une manœuvre pour se placer sur une route à un gisement prédéfini par rapport à une cible

L'automate technique de navigation 42A de la plateforme 16 interroge alors la base de données de paramétrage 46 pour déterminer le gisement prédéfini et calcule les commandes de cap, d'altitude, et de vitesse permettant de faire effectuer à la plateforme 16, la manœuvre de suite de tir. Comme illustré sur la figure 8, le simulateur 14 reçoit les commandes et déplace la plateforme 16 pour qu'elle suive la manœuvre de suite de tir.

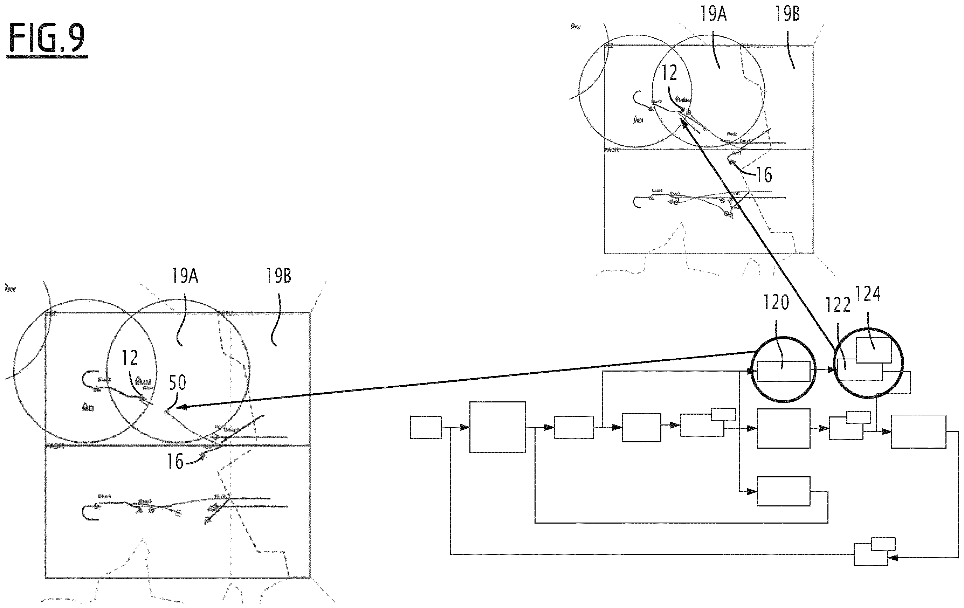

En parallèle, en référence à l'affichage en bas de la figure 9, l'automate technique de navigation 42A de la plateforme 12 détecte un événement de mission 120 correspondant à une alerte d'arrivée de missile 50 vers la plateforme 12, parmi les évènements présents dans la bibliothèque d'évènements 44.

Ceci engendre un basculement de l'automate technique de navigation 42A de la plateforme 12 dans un état technique 122 de survie dit « Evasive ». Cet état correspond à une manœuvre permettant d'échapper à une menace par une altération de route et d'altitude à un facteur de charge donné.

L'automate technique de navigation 42A de la plateforme 12 interroge alors la base de données de paramétrage 46 pour déterminer les variations d'altitude, de cap, et le facteur de charge donné et calcule les commandes de cap, d'altitude, et de vitesse permettant de faire effectuer à la plateforme 12, la manœuvre d'évasion au facteur de charge donné. Comme illustré sur l'affichage en haut de la figure 9, le simulateur 14 reçoit les commandes et déplace la plateforme 12 pour qu'elle effectue la manœuvre d'évasion.

D'autres évènements de missions sont susceptibles d'être détectés par chaque automate technique de navigation 42A d'une plateforme 12, 16 parmi les évènements présents dans la bibliothèque d'évènements 44.

Par exemple, un évènement 126 de fin de temps de vol d'un missile lancé associé à l'absence de cible restante provoque le passage de l'automate technique de navigation 42A dans un état technique 128 d'arrêt brusque de la mission ou « Abort ». Cet état correspond à une manœuvre brutale de demi-tour pour se reculer. L'automate technique de navigation 42A de la plateforme 12 interroge alors la base de données de paramétrage 46 pour déterminer les commandes de variations d'altitude, de cap, et le facteur de charge permettant de mettre en œuvre la manœuvre d'arrêt brusque.

Au contraire, un évènement 130 de fin de temps de vol d'un missile lancé associé à une cible restante provoque le retour de l'automate technique de navigation 42A dans son état initial.

Un événement 132 de « route cold » depuis un temps donné indiquant que la plateforme 12 s'éloigne de la zone dangereuse en tournant le dos aux menaces depuis un certain temps provoque le basculement de l'automate technique de navigation 42A dans un état 134 de demi-tour ou « Pump ». Ceci engendre des commandes 136 de manœuvre douce de demi-tour pour se replacer et le rebasculement de l'automate technique de navigation 42A dans son état initial.

Toutes les commandes engendrées par le système de génération 10 sont transmises en temps réel au calculateur 30 du simulateur 14, pour calculer l'évolution de la plateforme 12 et les actions qu'elle effectue au cours du temps.

Le système de génération 10 permet ainsi de modéliser de manière coopérative le comportement de plateformes 12, 16 dans un environnement tactique 18, dans un scénario de mission impliquant des états de mission prédéfinis de haut niveau.

L'environnement 18 peut être complexe, et peut évoluer dynamiquement en imposant un grand nombre de prises de décision aux différentes plateformes 12, 16 en fonction des évènements de mission présents dans la bibliothèque d'évènements 44.

Le simulateur 12 est ainsi propre à évoluer spontanément, sans nécessité de disposer d'un scénario prédéfini, en recevant en temps réel des commandes du système de génération 10, ce qui modifie à chaque instant le contexte de la mission en le rendant réaliste.

Dans cet exemple, le système de génération 10 comporte, pour chaque état tactique dans lequel un automate tactique 40A à 40E est susceptible de basculer, au moins un automate technique 42A à 42F associé à cet état tactique.

L'automate technique 42A à 42F associé à cet état tactique est propre à basculer dans des états techniques donnés et à élaborer des commandes sur la base d'évènements de missions de la bibliothèque d'évènements qui sont totalement indépendants des états tactiques de l'automate tactique 40A à 40E.

Ceci permet une grande indépendance de conception et de paramétrage des automates.

En variante, le basculement de l'automate technique 42A à 42F associé à un état tactique de l'automate tactique 40A à 40E dans des états techniques donnés et l'élaboration des commandes dépend non seulement des évènements de mission détectés, mais aussi avantageusement également de l'état tactique.

Dans une autre variante, le système de génération 10 comporte un automate technique 42A à 42F commun associé à plusieurs états tactiques de l'automate tactique 40A à 40E.

Le basculement de l'automate technique 42A à 42F associé à un état tactique de l'automate tactique 40A à 40E dans des états techniques donnés et l'élaboration des commandes dépend alors des évènements de mission détectés, et de l'état tactique dans lequel se trouve l'automate tactique 40A à 40E.

Dans la description qui précède, les automates tactiques 40A à 40E ont été illustrés comme étant associés à une seule plateforme. Dans une variante, le système de génération de commandes 10 comporte au moins un automate tactique de plus haut niveau propre à déterminer des états respectifs d'un groupe de plateformes 12 en fonction d'évènements de mission, afin d'activer au moins un automate tactique 40A à 40E de chaque plateforme 12.

Le groupe de plateformes 12 est par exemple une patrouille d'aéronefs. La patrouille peut être confrontée à une multitude de cibles et l'automate tactique de plus haut niveau est par exemple apte à déterminer le comportement individuel de chacune des plateformes de la patrouille en réponse à l'évènement de mission donné.

Comme précisé plus haut, grâce à l'architecture particulière à plusieurs niveaux d'automates 40A à 40E, 42A à 42F définie dans le système de génération 10 selon l'invention, les automates tactiques 40A à 40E d'une part, et les automates techniques 42A à 42F d'autre part, sont propres à agir indépendamment les uns des autres, en fonction des évènements de mission qu'ils identifient dans la bibliothèque d'évènements de mission, sans avoir à suivre un script temporel les activant, ou sans avoir à se synchroniser à l'aide d'une horloge.

Ainsi, chaque automate tactique 40A à 40E parmi tous les automates tactiques 40A à 40E d'une ou plusieurs plateformes 12, 16 est propre à basculer d'un état tactique initial de la plateforme 12, 16 à au moins un état tactique modifié de la plateforme 12, 16, de manière indépendante des autres automates tactiques 40A à 40E par l'identification d'évènements de mission qui lui sont propres et qui peuvent être différents des évènements de mission faisant basculer d'autres automates tactiques 40A à 40E d'un état tactique initial de la plateforme 12, 16 à au moins un état tactique modifié de la plateforme 12, 16.

De même, chaque automate technique 42A à 42F parmi tous les automates techniques 42A à 42F associés à un automate tactique 40A à 40E est propre à basculer d'un état technique initial de la plateforme 12, 16 à au moins un état technique modifié de la plateforme 12, 16, de manière indépendante des autres automates techniques 42A à 42F par l'identification d'évènements de mission qui lui sont propres et qui peuvent être différents des évènements de mission faisant basculer d'autres automates techniques 42A à 42F d'un état technique initial de la plateforme 12, 16 à au moins un état technique modifié de la plateforme 12, 16.

Ceci simplifie considérablement la structure algorithmique du système de génération 10 en permettant de modifier ou d'ajouter des automates tactiques 40A à 40E ou des automates techniques 42A à 42F, sans avoir à modifier les automates existants.

Comme indiqué précédemment, le paramétrage du basculement des automates 40A à 40E, 42A à 42F est assuré par la définition des évènements de mission qui sont élaborés par exemple par au moins un paramètre correspondant à une donnée de simulation, un opérateur mathématique de test, un seuil de valeur du paramètre à tester avec l'opérateur de test et/ou par une condition booléenne.

Chaque événement de mission est ainsi défini par au moins une condition d'occurrence non incluse dans un script temporel, la condition d'occurrence étant susceptible d'être remplie à tout instant au cours de la mission.

De la sorte, le basculement des automates 40A à 40E, 42A à 42F peut se produire à chaque instant lors de la mission dès que l'évènement de mission est identifié par l'automate tactique 40A à 40E ou par l'automate technique 42A à 42F. Le temps auquel l'automate tactique 40A à 40E ou l'automate technique 42A à 42F bascule n'est donc pas prédéfini. Un automate donné reste en outre dans son état modifié tant qu'un autre événement de mission provoquant un autre basculement d'état n'est pas identifié.

Ceci donne au système de génération 10 une grande latitude d'évolution spontanée, tout en assurant un paramétrage simple et facilement modifiable grâce à la définition des évènements de mission dans la bibliothèque 44 d'évènements de mission.

Ainsi, les réactions des différentes plateformes 12, 16 peuvent être paramétrées pour être différentes les unes des autres, par la définition d'évènements de mission spécifiques et des états qui basculent lorsque ces évènements de mission spécifiques sont identifiés. Ceci permet de reproduire le comportement de plusieurs équipages distincts qui peuvent appréhender les mêmes évènements de manière différente.

Par ailleurs, la définition à deux niveaux des automates 40A à 40E, 42A à 42F, avec des automates techniques 42A à 42F associés à un automate tactique 40A à 40E basculant d'un état tactique initial à un état tactique modifié, permet de segmenter les actions et donc les commandes à produire lors du basculement d'état tactique, conformément à ce que produirait un équipage réel lors d'un changement d'état tactique. Par exemple, suite à l'activation d'un capteur résultant du basculement d'un automate tactique 40A à 40E dans un état tactique modifié, plusieurs automates techniques 42A à 42F sont activés, pour respectivement commander différent paramètres du capteur par exemple le site, le gisement, etc.

La synchronisation entre les automates 40A à 40E des différentes plateformes 12, 16 est en particulier obtenue par le fait que les différents automates 40A à 40E des différentes plateformes 12, 16 sont propres à analyser le même environnement de mission et à identifier, au sein de cet environnement de mission, des évènements de mission qui leurs sont propres, sans nécessiter de coordonner les plateformes 12, 16 entre elles.

Par ailleurs, un même événement de mission est propre à être identifié par un automate tactique 40A à 40E d'une plateforme 12, 16 pour basculer de l'état tactique initial de la plateforme 12, 16 à l'au moins un état tactique modifié de la plateforme 12, 16 et à être identifié également par le ou chaque automate technique 42A à 42F associé à l'automate tactique 40A à 40E pour basculer de l'état technique initial de la plateforme 12, 16 à l'au moins un état technique modifié de la plateforme 12, 16.

Le basculement des automates 40A à 40E, 42A à 42F par l'identification d'évènements de mission permet au système de génération 10 d'être dépourvu d'horloge synchronisant le ou chaque automate tactique 40A à 40E et le ou chaque automate technique 42A à 42F.

En outre, aucun ordre de priorité n'est défini entre les évènements de mission susceptibles de se produire.

Par exemple, le ou chaque automate tactique 40A à 40E est propre à basculer d'un premier état tactique initial de la plateforme 12, 16 à au moins un premier état tactique modifié de la plateforme 12, 16 lors de l'identification d'un premier événement de mission contenu dans la bibliothèque d'évènements de mission, et est propre à basculer d'un deuxième état tactique initial de la plateforme 12, 16 à au moins un deuxième état tactique modifié de la plateforme 12, 16 lors de l'identification d'au moins un deuxième évènement de mission contenu dans la bibliothèque 44 d'évènements de mission, sans qu'aucune priorité ne soit définie entre le premier évènement de mission et le ou chaque deuxième évènement de mission pour le basculement d'états du ou de chaque automate tactique 40A à 40E.

De même, le ou chaque automate technique 42A à 42F est propre à basculer d'un premier état technique initial de la plateforme 12, 16 à au moins un premier état technique modifié de la plateforme 12, 16 lors de l'identification du premier évènement de mission contenu dans la bibliothèque 44 d'évènements de mission, et est propre à basculer d'un deuxième état technique initial de la plateforme à au moins un deuxième état technique modifié de la plateforme 12, 16 lors de l'identification du ou de chaque deuxième évènement de mission contenu dans la bibliothèque 44 d'évènements de mission, sans qu'aucune priorité ne soit définie entre le premier évènement de mission et le ou chaque deuxième évènement de mission pour le basculement d'états du ou de chaque automate technique 42A à 42F.

Ceci simplifie encore l'architecture logicielle et facilite les modifications et les ajouts, puisque les automates tactiques 40A à 40E ne sont pas interdépendants, et puisque les automates techniques 42A à 42F associés aux automates tactiques 40A à 40E ne sont pas non plus interdépendants.

## Revendications

1. Système (10) de génération de commandes reproduisant le comportement d'au moins un opérateur humain opérant au moins une plateforme (12, 16) sur la base d'évènements de mission au cours d'une mission simulée impliquant la plateforme (12, 16), le système de génération (10) comportant :
- une interface (38) de réception de données de simulation de la mission ;
- une bibliothèque (44) d'évènements de mission définis en fonction des données simulées de la mission ;
le système de génération (10) comportant, pour au moins une fonction à commander de la plateforme (12, 16) :
- au moins un automate logiciel tactique (40A à 40E), propre à basculer d'un état tactique initial de la plateforme (12 ; 16) à au moins un état tactique modifié de la plateforme (12 ; 16) lors de l'identification, à partir des données de simulation de la mission reçues de l'interface de réception (38), d'au moins un évènement de mission parmi les évènements de mission contenus dans la bibliothèque d'évènements de mission (44) ;
- au moins un automate logiciel technique (42A à 42F), associé à l'au moins un automate tactique (40A à 40E), l'automate technique (42A à 42F) étant propre à s'activer sur basculement de l'automate tactique (40A à 40E) dans l'état tactique modifié, et étant propre à basculer d'un état technique initial de la plateforme (12 ; 16) à au moins un état technique modifié de la plateforme (12 ; 16) lors de l'identification, à partir des données de simulation de la mission reçues de l'interface de réception (38), d'au moins un évènement de mission parmi les évènements de missions contenus dans la bibliothèque d'évènements de mission (44), l'automate technique (42A à 42F) étant propre, lors du basculement dans l'état technique modifié, à élaborer au moins une commande de la fonction à commander de la plateforme (12, 16).

2. Système de génération (10) selon la revendication 1, comprenant pour le ou chaque automate tactique (40A à 40E), une pluralité d'automates logiciels techniques (42A à 42F), associés à l'automate tactique (40A à 40E) pour élaborer une pluralité de commandes de systèmes distincts de la fonction à commander.

3. Système de génération (10) selon la revendication 1 ou 2, dans lequel le ou chaque automate tactique (40A à 40E) est propre à basculer dans des états tactiques modifiés distincts en fonction de l'évènement de mission identifié, le système de génération (10) comportant une pluralité d'automates techniques (42A à 42F) associés chacun à un état tactique modifié distinct pour des commandes distinctes de la fonction à commander.

4. Système de génération (10) selon l'une quelconque des revendications précédentes, dans lequel le ou chaque automate technique (42A à 42F), après avoir été activé par basculement dans l'état tactique modifié, est propre à élaborer la commande de la fonction à commander, indépendamment de l'état tactique modifié.

5. Système de génération (10) selon l'une quelconque des revendications 1 à 3, dans lequel le ou chaque automate technique (42A à 42F), après avoir été activé par basculement dans l'état tactique modifié, est propre à élaborer la commande de la fonction à commander en fonction de l'état tactique modifié.

6. Système de génération (10) selon la revendication 5, dans lequel au moins un même automate technique (42A à 42F) est activable par basculement de l'automate tactique (40A à 40E) dans au moins deux états tactiques modifiés distincts, l'automate technique (42A à 42F) étant propre à élaborer des commandes distinctes de la fonction à commander en fonction de l'état tactique modifié parmi les au moins deux états tactiques distincts.

7. Système de génération (10) selon l'une quelconque des revendications précédentes, comprenant une base de données (46) de paramétrage de l'élaboration des commandes en fonction de l'état technique modifié, propre à être interrogée par le ou chaque automate technique (42A à 42F) lors du basculement dans l'état technique modifié.

8. Système de génération (10) selon l'une quelconque des revendications précédentes, dans lequel la fonction à commander de la plateforme est choisie parmi une fonction de navigation de la plateforme (12, 16) dans l'environnement de mission (18), une fonction de gestion d'un capteur, une fonction de gestion d'un actionneur, une fonction de gestion de contraintes d'emploi entre des systèmes de la plateforme (12, 16), et une fonction de gestion de communication.

9. Système de génération (10) selon la revendication 8, dans laquelle la commande générée par l'automate technique est choisie parmi une commande de navigation, notamment une commande de vitesse, d'altitude, de cap, de pente, de facteur de charge maximal, une commande de gestion de capteur, notamment une commande d'un capteur radar, d'un capteur électromagnétique ou d'un capteur de guerre électronique, une commande d'actionneur, notamment une commande d'un système d'arme ou d'un système d'émission de rayonnement, une commande de gestion de contraintes d'emploi ou une commande d'un système de communication de la plateforme (12, 16).

10. Système de génération (10) selon l'une quelconque des revendications précédentes, dans lequel la bibliothèque d'évènements (44) contient une pluralité d'évènements de mission, chaque évènement de mission étant défini par au moins un paramètre correspondant à une donnée de simulation, un opérateur mathématique de test, un seuil de valeur du paramètre à tester avec l'opérateur de test et/ou par une condition booléenne.

11. Système de génération (10) selon la revendication 10, dans lequel au moins un évènement de mission comprend :
- plusieurs évènements primaires, chaque évènement primaire étant défini par au moins un paramètre correspondant à une donnée de simulation, un opérateur mathématique de test, un seuil de valeur du paramètre à tester avec l'opérateur de test et/ou par une condition booléenne ; et
- au moins un opérateur logique entre deux évènements primaires.

12. Système de génération (10) selon l'une quelconque des revendications précédentes, dans lequel la bibliothèque d'évènements (44) est propre à être mise à jour pour permettre à un utilisateur d'ajouter des nouveaux évènements de mission prédéfinis dans la bibliothèque d'évènements (44).

13. Simulateur (14) de comportement d'au moins une plateforme (12, 16) évoluant dans un environnement d'une mission, le simulateur (14) comportant :
- un calculateur (30), propre à calculer des données de simulation du comportement de la ou de chaque plateforme (12, 16) dans l'environnement de mission ;
- un système de génération (10) selon l'une quelconque des revendications précédentes, propre à recevoir des données de simulation du calculateur (30), à engendrer des commandes de fonctions à commander de la ou de chaque plateforme (12, 16) en fonction des données de simulation, le calculateur (30) étant propre à récupérer les commandes engendrées par le système de génération (10) pour calculer de nouvelles données de simulation tenant compte des commandes engendrées ;
- un afficheur (32) et un gestionnaire (34) d'affichage sur l'afficheur (32) propre à afficher une représentation d'évolution de la ou de chaque plateforme (12, 16) dans l'environnement de mission (18).

14. Simulateur (14) selon la revendication 13, comportant une interface homme-machine (36) raccordée au calculateur (30) pour paramétrer au moins un état d'une mission à simuler, et/ou pour permettre à un opérateur humain de commander des fonctions d'au moins une plateforme additionnelle (12, 16) évoluant dans la simulation en plus de la ou de chaque plateforme (12, 16) commandée sur la base des commandes du système de génération (10).

15. Procédé de génération de commandes reproduisant le comportement d'au moins un opérateur humain opérant au moins une plateforme (12, 16) sur la base d'évènements de mission au cours d'une mission simulée impliquant la plateforme (12, 16), mis en œuvre par un système de génération (10), le procédé comportant :
- la réception de données de simulation de la mission via une interface (38) de réception du système de génération (10) ;
puis, pour au moins une fonction à commander de la plateforme (12, 16) :
- le basculement d'au moins un automate logiciel tactique (40A à 40E) du système de génération (10), d'un état tactique initial de la plateforme (12 ; 16) à au moins un état tactique modifié de la plateforme (12 ; 16) lors de l'identification, à partir des données de simulation de la mission reçues de l'interface de réception (38), d'au moins un évènement de mission parmi les évènements de mission contenus dans une bibliothèque (44) d'évènements de mission définis en fonction des données simulées de la mission ;
- l'activation d'au moins un automate logiciel technique (42A à 42F) du système de génération (10), associé à l'au moins un automate tactique (40A à 40E), sur basculement de l'automate tactique (40A à 40E) dans l'état tactique modifié ;
- le basculement de l'automate logiciel technique (42A à 42F) d'un état technique initial de la plateforme (12 ; 16) à au moins un état technique modifié de la plateforme (12 ; 16) lors de l'identification, à partir des données de simulation de la mission reçues de l'interface de réception (38), d'au moins un évènement de mission parmi les évènements de missions contenus dans la bibliothèque d'évènements de mission (44),
- l'élaboration par l'automate technique (42A à 42F), lors du basculement dans l'état technique modifié d'au moins une commande de la fonction à commander de la plateforme (12, 16).
